(19) Europäisches Patentamt
European Patent Office
Office européen des brevets

(11) EP 2 297 068 B1

(12) EUROPEAN PATENT SPECIFICATION

(45) Date of publication and mention
of the grant of the patent:
**10.07.2013 Bulletin 2013/28**

(51) Int Cl.:
*C04B 35/48* (2006.01)          *C04B 35/482* (2006.01)
*C04B 35/484* (2006.01)         *C04B 35/49* (2006.01)
*C04B 35/505* (2006.01)         *C04B 35/64* (2006.01)

(21) Application number: **09750926.9**

(22) Date of filing: **11.05.2009**

(86) International application number:
**PCT/US2009/002908**

(87) International publication number:
**WO 2009/142695 (26.11.2009 Gazette 2009/48)**

(54) **LOW-STRAIN-RATE MODIFIED ZIRCON MATERIAL AND ARTICLES**

MODIFIZIERTES ZIRKONMATERIAL MIT GERINGER VERFORMUNGSRATE UND GEGENSTÄNDE

MATÉRIAU À BASE DE ZIRCON MODIFIÉ À FAIBLE VITESSE DE DÉFORMATION ET ARTICLES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **20.05.2008 US 128233**

(43) Date of publication of application:
**23.03.2011 Bulletin 2011/12**

(73) Proprietor: **Corning Incorporated
Corning, NY 14831 (US)**

(72) Inventors:
• **ADDIEGO, William, P.**
  **Big Flats**
  **NY 14814 (US)**
• **BENNETT, Michael, J.**
  **Big Flats**
  **NY 14814 (US)**

(74) Representative: **Zijlstra, Robert Wiebo Johan et al
Elkington and Fife LLP
Prospect House
8 Pembroke Road
Sevenoaks, Kent TN13 1XR (GB)**

(56) References cited:
**WO-A1-2006/108945      WO-A1-2008/103235
WO-A1-2008/136968      US-A- 4 579 829
US-A- 5 418 015           US-A- 6 121 177
US-A- 6 121 177           US-B2- 7 238 635
US-B2- 7 259 119**

• **AWAAD M ET AL: "Sintering of zircon: the role of additives", BRITISH CERAMIC TRANSACTIONS, INSTITUTE OF MATERIALS, LONDON, GB, vol. 102, no. 2, 1 April 2003 (2003-04-01), pages 69-72, XP009112458, ISSN: 0967-9782, DOI: DOI: 10.1179/096797803225001551**

**Description**

CROSS-REFERENCE TO RELATED APPLICATION

The present application claims priority to United States Provisional Patent Application Serial No. 61/128233, filed on May 20, 2008 and entitled "LOW-STRAIN-RATE MODIFIED ZIRCON MATERIAL AND ARTICLES," the content of which is relied upon.

TECHNICAL FIELD

The present invention relates to refractory materials based on modified zircon ($ZrO_2 \cdot SiO_2$), articles comprising the same materials, and methods for making the same. In particular, the present invention relates to sintered zircon refractory material modified by $TiO_2$ and/or $Y_2O_3$, articles such as isopipes made of such materials, and sintering methods for making such materials and articles. The present invention is useful, e.g., in making refractory materials for glass-melting furnaces, glass-forming apparatuses such as isopipes for use in fusion down-draw processes in making flat glass sheets.

BACKGROUND

The fusion process is one of the basic techniques used to produce sheet glass and can produce sheet glass having surfaces with superior flatness and smoothness relative to sheet glass produced by alternative processes, such as, for example, the float and slot draw processes. As a result, the fusion process has found advantageous use in the production of the glass substrates used in the manufacture of light emitting displays, such as liquid crystal displays (LCDs).
The fusion process, specifically, the overflow downdraw fusion process, includes a supply pipe which provides molten glass to a collection trough formed in a refractory body known as an isopipe. During the overflow downdraw fusion process, molten glass passes from the supply pipe to the trough and then overflows the top of the trough on both sides, thus forming two sheets of glass that flow downward and then inward along the outer surfaces of the isopipe. The two sheets meet at the bottom or root of the isopipe, where they fuse together into a single sheet. The single sheet is then fed to drawing equipment that controls the thickness of the sheet by the rate at which the sheet is drawn away from the root. The drawing equipment is located well downstream of the root so that the single sheet has cooled and become rigid before coming into contact with the equipment.
The outer surfaces of the final glass sheet do not contact any part of the outside surface of the isopipe during any part of the process. Rather, these surfaces only see the ambient atmosphere. The inner surfaces of the two half sheets which form the final sheet do contact the isopipe, but those inner surfaces fuse together at the root of the isopipe and are thus buried in the body of the final sheet. In this way, the superior properties of the outer surfaces of the final sheet are achieved.
The dimensional stability of an isopipe during the glass forming process can affect the overall success of the manufacturing process, as well as the properties of the manufactured glass sheet. In the overflow downdraw fusion process, an isopipe can be subjected to temperatures of about 1,000 °C. While exposed to these temperatures, an isopipe must support its own weight, the weight of the molten glass contained within the isopipe and overflowing its sides, and at least some tensional force that is transferred back to the isopipe through the fused glass as it is being drawn.
Commercial and market factors require a continuous increase in the size of light emitting displays and thus, the size of sheet glass. The wider the glass sheet, the wider is required of the isopipe.
Isopipes have conventionally been manufactured from isostatically pressed blocks of refractory material (hence the name "iso-pipe"). In particular, isostatically pressed zircon refractories have been used to form isopipes for the fusion process. Conventional zircon refractories are based on zircon ($ZrO_2 \cdot SiO_2$, or $ZrSO_4$). Even with such high performance materials, the isopipe can creep overtime during operation, resulting in dimensional changes which limit their useful life. In particular, isopipes exhibit sag such that the middle of the unsupported length of the pipe drops below the height of its outer supported ends.
Thus, there is a need to address dimensional stability and other shortcomings associated with conventional isopipes and methods for manufacturing sheet glass. These needs and other needs are satisfied by the composition and methods of the present invention.

SUMMARY

Several aspects of the present invention are disclosed herein. It is to be understood that these aspects may or may not overlap with one another. Thus, part of one aspect may fall within the scope of another aspect, and vice versa.
Each aspect is illustrated by a number of embodiments, which, in turn, can include one or more specific embodiments. It is to be understood that the embodiments may or may not overlap with each other. Thus, part of one embodiment, or specific embodiments thereof may or may not fall within the ambit of another embodiment, or specific embodiments thereof, and vice versa.

A first aspect of the present invention relates to a method for making a low creep-rate sintered zircon refractory material, as is set out in claim 1. curve.

In certain embodiments of the first aspect of the present invention, the zircon particles provided in step (i) comprise $TiO_2$ in the amount of at least 0.2 wt%, in certain embodiments at least 0.3 wt%, in certain other embodiments at least 0.4 wt%, in certain embodiments at least 0.6 wt%, in certain other embodiments at least 0.8 wt%, in certain embodiments at least 1.0 wt%.

In certain embodiments of the first aspect of the present invention, the zircon particles comprise $Y_2O_3$ in the amount of at most 8 wt%, in certain embodiments at most 6 wt%, in certain embodiments at most 4 wt%, in certain embodiments at most 2 wt%, in certain embodiments at least 0.5 wt%.

In certain embodiments of the first aspect of the present invention, the final sintered zircon refractory material has a total porosity of at most 10%, in certain embodiments at most 8%, in certain embodiments at most 6%, in certain embodiments at most 5%, in certain embodiments at most 4%.

In certain embodiments of the first aspect of the present invention, ( at least 96%, in certain embodiments at least 97%, in certain embodiments at least 98%, in certain embodiments at least 99%, in certain embodiments at least 99.5%) of the zircon particles have a particle size of from 0.1 to 150 $\mu$m.

In certain embodiments of the first aspect of the present invention, at least 95% (in certain embodiments at least 96%, in certain embodiments at least 97%, in certain embodiments at least 98%, in certain embodiments at least 99%, in certain embodiments at least 99.5%) of the zircon particles have a particle size of from 0.1 to 100 $\mu$m.

In certain embodiments of the first aspect of the present invention, the particle size distribution curve of the zircon particles provided in step (i) is multi-modal, having at least one valley (in certain embodiments at least 2, in certain embodiments at least 3, in certain embodiments at least 4) between 1 $\mu$m and 80 $\mu$m.

In certain embodiments of the first aspect of the present invention, the particle size distribution curve of the zircon particles is multi-modal, having at least one valley (in certain embodiments at least 2, in certain embodiments at least 3, in certain embodiments at least 4) between 10 $\mu$m and 80 $\mu$m.

In certain embodiments of the first aspect of the present invention, at most 50% of the zircon particles have a size of less than 1 $\mu$m, in certain embodiments at most 40%, in certain embodiments at most 30%.

A second aspect of the present invention relates to a sintered zircon refractory material comprising $TiO_2$ and $Y_2O_3$, having a density in certain embodiments higher than 4.10 g·cm$^{-3}$, in certain embodiments higher than 4.20 g·cm$^{-3}$, in certain embodiments higher than 4.30 g·cm$^{-3}$, in certain embodiments higher than 4.40 g·cm$^{-3}$.

In certain embodiments of the second aspect of the present invention, the sintered zircon refractory material has a creep rate of lower than 3.50x10$^{-7}$ hr$^{-1}$, in certain embodiments lower than 3.20x10$^{-7}$ hr$^{-1}$, in certain embodiments lower than 3.00x10$^{-7}$ hr$^{-1}$, in certain embodiments lower than 2.50x10$^{-7}$ hr$^{-1}$, in certain other embodiments lower than 2.00x10$^{-7}$ hr$^{-1}$.

In certain embodiments of the second aspect of the present invention, the sintered zircon refractory material comprises $TiO_2$ in the amount of at least 0.1 wt%, in certain embodiments at least 0.2 wt%, in certain embodiments at least 0.3 wt%, in certain other embodiments at least 0.4 wt%, in certain embodiments at least 0.6 wt%, in certain other embodiments at least 0.8 wt%, in certain embodiments at least 1.0 wt%.

In certain embodiments of the second aspect of the present invention, the sintered zircon refractory material comprises $Y_2O_3$ in the amount of at most 10 wt%, in certain embodiments at most 8 wt%, in certain embodiments at most 6 wt%, in certain embodiments at most 4 wt%, in certain embodiments at most 2 wt%, in certain embodiments at least 0.5 wt%.

In certain embodiments of the second aspect of the present invention, the sintered zircon refractory material has a total porosity of at most 10%, in certain embodiments at most 8%, in certain embodiments at most 6%, in certain embodiments at most 5%, in certain embodiments at most 4%.

In certain embodiments of the second aspect of the present invention, the sintered zircon refractory material comprises packed zircon particles sintered together, wherein at least 95% (in certain embodiments at least 96%, in certain embodiments at least 97%, in certain embodiments at least 98%, in certain embodiments at least 99%, in certain embodiments at least 99.5%) of the particles have a particle size of from 0.1 to 150 $\mu$m.

In certain embodiments of the second aspect of the present invention, the sintered zircon refractory material comprises packed zircon particles sintered together, wherein at least 95% (in certain embodiments at least 96%, in certain embodiments at least 97%, in certain embodiments at least 98%, in certain embodiments at least 99%, in certain embodiments at least 99.5%) of the particles have a particle size of from 0.1 to 100 $\mu$m.

In certain embodiments of the second aspect of the present invention, the sintered zircon particles have a multi-modal particle size distribution curve exhibiting a valley between 1 $\mu$m and 80 $\mu$m.

In certain embodiments of the second aspect of the present invention, the sintered zircon particles have a multi-modal particle size distribution curve exhibiting a valley between 10 μm and 80 μm.

One or more embodiments of one or more of the various aspects of the present invention have one or more of the following advantages. First, by using a mixture of zircon particles having a multi-modal particle size distribution, a closer packing of the particles in the green body can be obtained, resulting in a final sintered zircon material having a lower creep rate. Second, by including $TiO_2$ and $Y_2O_3$ further into the starting material, the final sintered zircon can have further improved creep rate.

Additional features and advantages of the invention will be set forth in the detailed description which follows, and in part will be readily apparent to those skilled in the art from the description or recognized by practicing the invention as described in the written description and claims hereof, as well as the appended drawings.

It is to be understood that the foregoing general description and the following detailed description are merely exemplary of the invention, and are intended to provide an overview or framework to understanding the nature and character of the invention as it is claimed.

BRIEF DESCRIPTION OF THE DRAWINGS

In the accompanying drawings,

FIG. 1 is a schematic illustration of an isopipe in operation to produce a glass sheet in a fusion down-draw process.

FIG. 2 is a diagram showing zircon particle size distribution curves in a plurality of embodiments of the process of the present invention.

FIG. 3 is another diagram showing zircon particle size distribution curves in a plurality of other embodiments of the process of the present invention.

DETAILED DESCRIPTION

Unless otherwise indicated, all numbers such as those expressing weight percents of ingredients, dimensions, and values for certain physical properties used in the specification and claims are to be understood as being modified in all instances by the term "about." It should also be understood that the precise numerical values used in the specification and claims form additional embodiments of the invention. Efforts have been made to ensure the accuracy of the numerical values disclosed in the Examples. Any measured numerical value, however, can inherently contain certain errors resulting from the standard deviation found in its respective measuring technique.

As used herein, in describing and claiming the present invention, the use of the indefinite article "a" or "an" means "at least one," and should not be limited to "only one" unless explicitly indicated to the contrary. Thus, for example, reference to "a sintering aid" includes embodiments having two or more such sintering aids, unless the context clearly indicates otherwise.

All percentages in the present disclosure are by weight unless otherwise specified.

In the present disclosure, the term "strain rate" and the term "creep rate" are used interchangeably. Creep rate is an indicator of the amount of deformation of a material at a given temperature in a given period of time under a given load. In the present disclosure, the creep rate is measured by a three point deflection measurement technique operating at 1180°C while the sample is under a load of 1000 psi for 100 hours during the test. The final reported creep rate is normalized to the sample size.

As used herein, "multi-modal" means that the particle size distribution curve exhibits a plurality of peaks and a valley between every two adjacent peaks in the range from 0.1 μm to 150 μm. Thus, specific embodiments of multi-modal particle size distribution curve in the range from 0.1 μm to about 150 μm include, but are not limited to: (i) a curve having two peaks and one valley therebetween; (ii) a curve having three peaks and one valley between every two adjacent peaks; and (iii) a curve having four peaks and one valley between every two adjacent peaks. In certain specific embodiments, a peak can be around 1 μm, 10 μm, 50 μm, or 80 μm.

A. The Fusion Process

The fusion process is one of the basic techniques used in the glass making art to produce sheet glass. See, for example, Varshneya, Arun K., "Flat Glass," Fundamentals of Inorganic Glasses, Academic Press, Inc., Boston, 1994, Chapter 20, Section 4.2., 534-540. Compared to other processes known in the art, e.g., the float and slot draw processes, the fusion process produces glass sheets whose surfaces have superior flatness and smoothness. As a result, the fusion process has become of particular importance in the production of the glass substrates used in the manufacture of liquid crystal displays (LCDs).

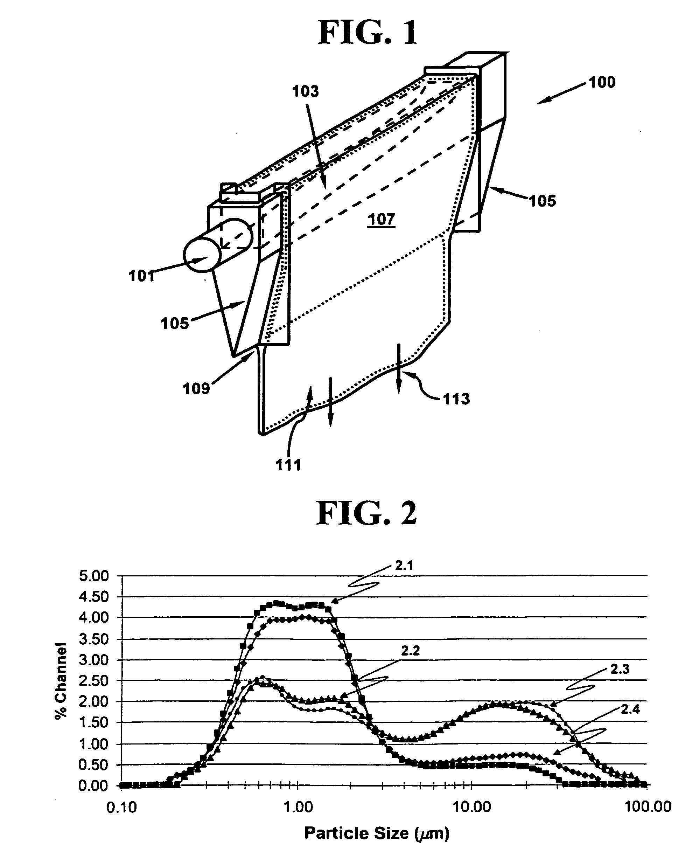

The fusion process, specifically, the overflow downdraw fusion process, is the subject of commonly assigned U.S. Patents Nos. 3,338,696 and 3,682,609, to Stuart M. Dockerty, the contents of which are incorporated herein by reference. A schematic drawing of the process of these patents is shown In FIG. 1. As illustrated therein, the system includes a supply pipe 101 which provides molten glass to a collection trough 103 formed in a refractory body 105 known as an "isopipe."

Once steady state operation has been achieved, molten glass passes from the supply pipe to the trough and then overflows the top of the trough on both sides, thus forming two sheets of glass that flow downward and then inward along the outer surfaces of the isopipe. The two sheets meet at the bottom or root 109 of the isopipe, where they fuse together into a single sheet. The single sheet is then fed to drawing equipment (represented schematically by arrows 113), which controls the thickness of the sheet by the rate at which the sheet is drawn away from the root. The drawing equipment is located well downstream of the root so that the single sheet has cooled and become rigid before coming into contact with the equipment.

As can be seen in FIG. 1, the outer surfaces of the final glass sheet do not contact any part of the outside surface of the isopipe during any part of the process. Rather, these surfaces only see the ambient atmosphere. The inner surfaces of the two half sheets which form the final sheet do contact the isopipe, but those inner surfaces fuse together at the root of the isopipe and are thus buried in the body of the final sheet. In this way, the superior properties of the outer surfaces of the final sheet are achieved.

As is evident from the foregoing, isopipe 105 is critical to the success of the fusion process. In particular, the dimensional stability of the isopipe is of great importance since changes in isopipe geometry affect the overall success of the process. See, for example, Overman, U.S. Patent No. 3,437,470, and Japanese Patent Publication No. 11-246230.

Significantly, the conditions under which the isopipe is used make it susceptible to dimensional changes. Thus, the isopipe must operate at elevated temperatures on the order of 1000°C and above. Moreover, in the case of the overflow downdraw fusion process, the isopipe must operate at these elevated temperatures while supporting its own weight as well as the weight of the molten glass overflowing its sides and in trough 103, and at least some tensional force that is transferred back to the isopipe through the fused glass as it is being drawn. Depending on the width of the glass sheets that are to be produced, the isopipe can have an unsupported length of 3.0 meters or more.

To withstand these demanding conditions, isopipes 105 have been manufactured from isostatically pressed blocks of refractory material (hence the name "iso-pipe"). In particular, isostatically pressed zircon refractories have been used to form isopipes for the fusion process. In certain embodiments the refectory material making up of the isopipe can comprise more than 95% by weight of $ZrO_2 \cdot SiO_2$. Even with such high performance materials, in practice, isopipes exhibit dimensional changes which limit their useful life. In particular, isopipes exhibit sag such that the middle of the unsupported length of the pipe drops below its outer supported ends. The present invention is concerned with controlling such sag.

Without intending to be bound by a particular theory, a primary contributor to the sag of an isopipe is the creep rate is believed to be creep rate

$$\dot{\varepsilon} = d\varepsilon/dt$$

of the material from which it is made. As known in the art, for many materials, creep rate as a function of applied stress $\sigma$ can be modeled by a power law expression of the following form:

$$\dot{\varepsilon} = A \cdot \sigma \cdot \exp(Q/T) \qquad (1),$$

where T is temperature and $A, n,$ and $Q$ are material dependent constants. See Kingery et al., "Plastic Deformation, Viscous Flow, and Creep," Introduction to Ceramics, 2nd edition, John Wiley & Sons, New York, 1976, 704-767 and, in particular, equation 14.9. Being the time derivative of strain, the units of creep rate are length/length/time. Because in equation (1) creep rate varies as stress raised to a power, i.e., $\sigma^n$, the use of equation (1) will be referred to herein as the "power law model."

Lowering the creep rate of the material used to make an isopipe results in less sag during use. For large-size isopipes for making large-size glass sheets, reducing the creep rate thereof is particularly important, due to the increased tendency of the isopipe to sag as a result of the larger weight and longer width.

B. Zircon Refractories

Wehrenberg et al., U.S. Patent No. 5,124,287 relates to the use of zirconia in particle form to improve the thermal shock resistance of zircon refractories. Titania is employed to enhance grain growth during sintering. The patent claims titania concentrations between 0.1 wt.% and 4 wt.%. The preferred titania concentration is 1 wt.%, and when blistering is a problem, only 0.1 wt.% titania is used. The patent states that "grog" having a titania concentration of 0.2 wt.% was used as a starting material for some of its examples.

To decrease the creep rate of zircon, it appears necessary to do several things: 1) increase the bulk density of the zircon article to eliminate or minimize porosity - a source of creep; 2) increase grain size and decrease grain boundary or grain boundary concentration; and 3) increase quality and strength of the zircon grain-grain interface. The following invention addresses these areas.

Conventionally, a sintering aid, such as $TiO_2$, is added to the zircon composition to either increase grain size of zircon or increase strength, depending on the mechanism. In addition, it is well-know that $Y_2O_3$ is added to stabilize zirconia, and has been described to lower creep rate in zirconia-containing compositions. The sintering aids are added to zircon as oxide solids, batched, pressed into articles and fired. The result is a much denser, stronger zircon body.

This invention shows that $TiO_2$ and $Y_2O_3$ together can lower the creep rate, or creep rate, without zirconia present, and that the particle size distribution has a large impact on the creep rate, even in the presence of the $TiO_2$ and $Y_2O_3$ sintering aids.

Zircon compositions with certain particle size distributions and in the presence of $TiO_2$ and $Y_2O_3$ sintering aids can yield creep rate $<3.5 \times 10^{-7}$/hr, but that other particle size distributions can increase the creep rate $>3.5 \times 10^{-7}$/hr. Therefore, it is desired to select particle size distribution of zircon, such that it can optimally use the sintering aids to increase grain growth, increase strength and density.

One advantage of the invention is to most efficiently use sintering aids to achieve the desired microstructure and physical and mechanical properties of the fired zircon article while ensuring the desired thermomechanical properties for long service life in forming glass sheet.

A mixture of zircon is prepared by median size ratio and wt% proportion in a batch. To the zircon is added $TiO_2$ and $Y_2O_3$ in wt% amounts as desired, preferentially >0.1 wt% and <10.0 wt%, respectively. Water or alcohol is added to yield a slurry, and the slurry is shear-mixed, such as by ball milling, for several hours to homogenize the mixture. The mixture is dried, such as by spray drying. To the mixture, a solution or slurry of the sintering aid is added such that the amount of fluid volume slightly exceeds the pore volume of the zircon powder, mixed and dried. Alternatively, the sintering aid is added either dispersed or in a dispersible state to the zircon mixture slurry, shear-mixed and homogenized, and then spray-dried. The promoted zircon mixture is formed, such as by isostatic pressing, and fired at the desired sintering temperature, such as >1500°C.

TABLE I

| Sample No. | Composition (wt%) | | | | | Creep Rate $(\times 10^{-7}\ hr^{-1})$ | Total Porosity* (%) | Density (g·cm$^{-3}$) |
|---|---|---|---|---|---|---|---|---|
| | Zircon particles | | | Rutile | $Y_2O_3$ | | | |
| | 25 $\mu$m | 7 $\mu$m | 1 $\mu$m | | | | | |
| 2.1 | 30 | 10 | 60 | 0.8 | 1.0 | 3.40 | 3.46 | 4.46 |
| 2.2 | 20 | 50 | 30 | 0.8 | 1.0 | 1.64 | 6.06 | 4.34 |
| 2.3 | 30 | 40 | 30 | 0.8 | 1.0 | 1.22 | 9.09 | 4.20 |
| 2.4 | 30 | 10 | 60 | 0.4 | 1 | 5.62 | 3.46 | 4.46 |
| * Total porosity is calculated based on a theoretical 100% density of 4.62 g·cm$^{-3}$. | | | | | | | | |

TABLE I, above, shows a ternary zircon composition made with mixtures of zircon powders with median particle sizes of 25 $\mu$m, 7 $\mu$m, and 1 $\mu$ml, and titania and yttria as sintering aids. The results show the impact of zircon particle size distribution on creep rate. In certain compositions, such as 2.4, and 2.1, increasing the zircon composition with too much 1 $\mu$m zircon increases the creep rate, even with high levels of titania and yttria. From the data, increasing the coarse and/or medium-size concentration of zircon with sufficient titania and yttria significantly lowers creep rate to $<2 \times 10^{-7}$/hr, as in examples 2.2 and 2.3. However, even with significant amount of sintering aids, creep rates increase with higher concentration of grain boundaries, as would occur with higher concentrations of fine zircon (1 $\mu$m), as in examples 2.4 and 2.1. Thus, to maintain creep rates $<3 \times 10^{-7}$ /hr the proper grain size distribution of zircon is required to more effectively use sintering aids. The particle size distribution of the zircon mixtures is shown below. The more "uniform" distribution of particle sizes indicated by 2.2 and 2.3, are desirable to achieve low a creep rate. The desired particle size distributions are derived from mixtures including binary, ternary, quaternary, zircon components, each with their own median size, as suggested in the above table, and distribution. Included are continuous distribution mixtures that exhibit a high particle packing efficiency or that have a wide and uniform distribution. Compositions 2.2 and 2.3 exhibit particle packing higher and more efficient than 2.4 and 2.1, exhibiting a higher coarser fraction and less finer fraction. See FIG. 2. Without intending to be bound by a particular theory, it is believed that a mixture of fine components and coarser components in the range from 0.1 $\mu$m to 150 $\mu$m results in better packing in the green body before sintering, which, in turn, leads to a final sintered ceramic structure having lower creep rate.

In another set of examples, where an additional coarse fraction is added and a higher concentration of 1 $\mu$m material is used, the creep rate can be significantly lowered, as shown below in TABLE II.

TABLE II

| Sample No. | Composition (wt%) | | | | | | Creep Rate $(\times 10^{-7}$ hr$^{-1})$ | Total Porosity* (%) | Density $(g \cdot cm^{-3})$ |
|---|---|---|---|---|---|---|---|---|---|
| | Zircon particles | | | | Rutile | $Y_2O_3$ | | | |
| | 49 $\mu$m | 25 $\mu$m | 7 $\mu$m | 1 $\mu$m | | | | | |
| 3.1 | 5 | 30 | 15 | 50 | 0.8 | 1.0 | 1.91 | 5.19 | 4.38 |
| 3.2 | 5 | 30 | 25 | 40 | 0.8 | 1.0 | 2.05 | 9.09 | 4.20 |
| 3.3 | 5 | 30 | 15 | 50 | 0.4 | 1.0 | 5.08 | 4.11 | 4.43 |

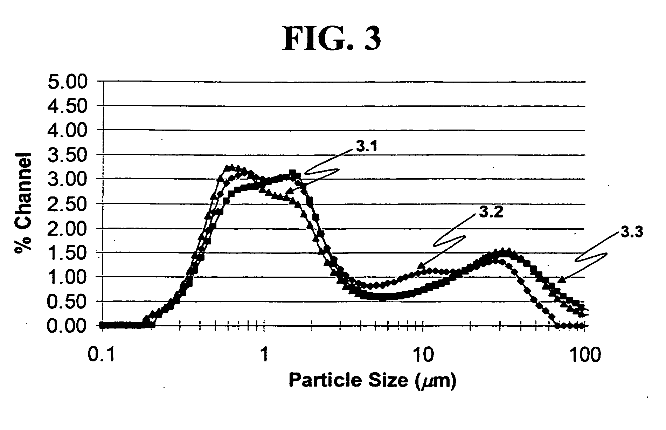

Compared with the ternary mixtures, quaternary mixtures with a high coarse fraction (49 $\mu$m + 25 $\mu$m zircon) can utilize a higher fine fraction (1 $\mu$m) while maintaining low creep rate and high density, especially where sufficient titania is used, which appears to have a larger impact on lowering creep rate than yttria. With half the amount of titania, 3.3 shows a significantly higher creep rate than 3.1, both of which have the same amount of yttria. The particle size distribution of the mixtures is shown in FIG. 3.

It is believed that the multi-modal particle size distribution of the zircon particles used for making the sintered zircon refractory material also results in a multi-modal distribution of the sizes of the sintered zircon particles (grains) upon sintering. It is further believed that the sintering would not significantly alter the sintered particle size of the large particles (such as those having a particle size higher than 50 $\mu$m, e.g., higher than 60 $\mu$m, or higher than 80 $\mu$m, or higher than 100 $\mu$m). Thus, the advantageous particle size distribution of the zircon particles used in forming the green body translates to an advantageous final grain size distribution in the sintered zircon material and grain boundary, which determines the properties thereof, such as creep rate, and the like.

The results show that zircon particle size distribution of the particles used for making the green body has significant impact on creep rate of the sintered material. In certain embodiments, the impact has enough of an impact on creep rate that sintering aids can be rendered ineffective to lower creep rate below $3.5 \times 10^{-7}$/hr. This invention demonstrates that controlling zircon particle size distribution is important for obtaining a low creep rate of the final sintered material even if a sintering aid is used.

It will be apparent to those skilled in the art that various modifications and alterations can be made to the present invention without departing from the scope the appended claims.

**Claims**

**1.** A method for making a sintered zircon refractory material, comprising the following steps:

(i) providing a plurality of zircon particles mixed with at least 0.1 wt% $TiO_2$ and at most 10 wt% $Y_2O_3$;
(ii) isopressing the particles to form a green body; and
(iii) sintering the green body at a temperature of at least 1500°C to obtain a dense, sintered zircon material, wherein:

(a) the zircon particles provided in step (i) have a multimodal particle size distribution curve which has a valley between 1 $\mu$m and 80 $\mu$m;
(b) at least 95% of the zircon particles provided in step (i) have a particle size of from 0.1 to 150 $\mu$m, and
(c) the sintered zircon refractory material has a density higher than 4.00 $g \cdot cm^{-3}$.

**2.** A method according to claim 1, wherein the zircon particles comprise $TiO_2$ in the amount of at least 0.2 wt%.

**3.** A method according to claim 1 or claim 2, wherein the zircon particles comprise $Y_2O_3$ in the amount of at most 8 wt%.

**4.** A method according to any one of claims 1 to 3, wherein the final sintered zircon refractory material has a total porosity of at most 5%.

**5.** A method according to any one of claims 1 to 4, wherein the final sintered zircon refractory material has a creep rate of lower than $3.50 \times 10^{-7}$ hr$^{-1}$.

**6.** A method according to any one of claims 1 to 5, wherein the particle size distribution curve of the zircon particles has a valley between 10 $\mu$m and 80 $\mu$m.

**7.** A method according to any one of claims 1 to 6, wherein at most 50% of the zircon particles have a size of less than 1 $\mu$m.

**8.** A sintered zircon refractory material comprising $TiO_2$ and $Y_2O_3$, having a density higher than 4.00 g·cm$^{-3}$, comprising a plurality of packed zircon particles sintered together, wherein the particle size distribution curve of the zircon particles is multi-modal, having a valley between 1 $\mu$m and 80 $\mu$m, and at least 95% of the packed zircon particles sintered together have a particle size of from 0.1 to 150 $\mu$m.

**9.** A sintered zircon refractory material according to claim 8 having a creep rate of lower than 3.50x10$^{-7}$ hr$^{-1}$.

**10.** A sintered zircon refractory material according to claim 8 or claim 9, comprising $TiO_2$ in the amount of at least 0.1 wt%.

**11.** A sintered zircon refractory material according to any one of the preceding claims 8 to 10, comprising $Y_2O_3$ in the amount of at most 6 wt%.

**12.** A sintered zircon refractory material according to any one of the preceding claims 8 to 11, having a total porosity of at most 5%.

**13.** A sintered zircon refractory material according to any of the preceding claims 8 to 12, wherein the particle size distribution curve has a valley between 10 $\mu$m and 80 $\mu$m.

**Patentansprüche**

**1.** Verfahren zur Herstellung eines gesinterten feuerfesten Zirkonmaterials, das die folgenden Schritte umfasst:

(i) Bereitstellen einer Vielzahl an Zirkonpartikeln, die mit mindestens 0,1 Gew.-% $TiO_2$ und höchstens 10 Gew.-% $Y_2O_3$ gemischt sind;
(ii) Isopressen der Partikel, um einen Grünkörper zu bilden; und
(iii) Sintern des Grünkörpers bei einer Temperatur von mindestens 1500°C, um ein dichtes, gesintertes Zirkonmaterial zu erhalten,
worin:

(a) die im Schritt (i) bereitgestellten Zirkonpartikel eine multimodale Partikelgrößenverteilungskurve aufweisen, die zwischen 1 $\mu$m und 80 $\mu$m ein Tal aufweist;
(b) mindestens 95 % der im Schritt (i)
bereitgestellten Zirkonpartikel eine Partikelgröße von 0,1 bis 150 $\mu$m aufweisen, und
(c) das gesinterte feuerfeste Zirkonmaterial eine Dichte von höher als 4,00 g·cm$^{-3}$ aufweist.

**2.** Verfahren nach Anspruch 1, worin die Zirkonpartikel $TiO_2$ in einer Menge von mindestens 0,2 Gew.-% umfassen.

**3.** Verfahren nach Anspruch 1 oder Anspruch 2, worin die Zirkonpartikel $Y_2O_3$ in einer Menge von höchstens 8 Gew.-% umfassen.

**4.** Verfahren nach einem der Ansprüche 1 bis 3, worin das endgültige gesinterte feuerfeste Zirkonmaterial eine Gesamtporosität von höchstens 5% aufweist.

**5.** Verfahren nach einem der Ansprüche 1 bis 4, worin das endgültige gesinterte feuerfeste Zirkonmaterial eine Kriechrate von kleiner als 3,50 x 10$^{-7}$ Std.$^{-1}$ aufweist.

**6.** Verfahren nach einem der Ansprüche 1 bis 5, worin die Partikelgrößenverteilungskurve der Zirkonpartikel ein Tal zwischen 10 $\mu$m und 80 $\mu$m aufweist.

**7.** Verfahren nach einem der Ansprüche 1 bis 6, worin höchstens 50 % der Zirkonpartikel eine Größe von kleiner als 1 $\mu$m aufweisen.

**8.** Gesintertes feuerfestes Zirkonmaterial, das $TiO_2$ und $Y_2O_3$ umfasst, eine Dichte von höher als 4,00 g·cm$^{-3}$ aufweist, eine Vielzahl an gepackten Zirkonpartikeln umfasst, die zusammengesintert sind, worin die Partikelgrößenverteilungskurve der Zirkonpartikel multimodal ist, ein Tal zwischen 1 $\mu$m und 80 $\mu$m aufweist, und mindestens 95 % der gepackten Zirkonpartikel, die zusammengesintert sind, eine Partikelgröße von 0,1 bis 150 $\mu$m aufweisen.

**9.** Gesintertes feuerfestes Zirkonmaterial nach Anspruch 8, das eine Kriechrate von kleiner als 3,50 x 10$^{-7}$ Std.$^{-1}$ aufweist.

**10.** Gesintertes feuerfestes Zirkonmaterial nach Anspruch 8 oder Anspruch 9, das $TiO_2$ in einer Menge von mindestens 0,1 Gew.-% umfasst.

**11.** Gesintertes feuerfestes Zirkonmaterial nach einem der vorstehenden Ansprüche 8 bis 10, das $Y_2O_3$ in einer Menge von höchstens 6 Gew.-% umfasst.

**12.** Gesintertes feuerfestes Zirkonmaterial nach einem der vorstehenden Ansprüche 8 bis 11, das eine Gesamtporosität von höchstens 5 % aufweist.

**13.** Gesintertes feuerfestes Zirkonmaterial nach einem der vorstehenden Ansprüche 8 bis 12, worin die Partikelgrößenverteilungskurve ein Tal zwischen 10 pm und 80 $\mu$m aufweist.

**Revendications**

**1.** Procédé de fabrication d'un matériau réfractaire à base de zircon fritté, comprenant les étapes suivantes consistant à :

(i) fournir une pluralité de particules de zircon mélangées à au moins 0,1 % en poids de $TiO_2$ et au plus 10 % en poids de $Y_2O_3$ ;
(ii) compresser de façon isostatique les particules pour former un corps vert ; et
(iii) fritter le corps vert à une température d'au moins 1500° C pour obtenir un matériau à base de zircon fritté dense,
dans lequel :

(a) les particules de zircon fournies à l'étape (i) ont une courbe de distribution de tailles de particules multimodale qui est dotée d'un creux entre 1 $\mu$m et 80 $\mu$m ;
(b) au moins 95 % des particules de zircon fournies à l'étape (i) ont une taille de particules allant de 0,1 à 150 $\mu$m, et
(c) le matériau réfractaire à base de zircon fritté a une densité supérieure à 4,00 g·cm$^{-3}$.

**2.** Procédé selon la revendication 1, dans lequel les particules de zircon comprennent $TiO_2$ dans la quantité d'au moins 0,2 % en poids.

**3.** Procédé selon la revendication 1 ou la revendication 2, dans lequel les particules de zircon comprennent $Y_2O_3$ dans la quantité d'au plus 8 % en poids.

**4.** Procédé selon l'une quelconque des revendications 1 à 3, dans lequel le matériau réfractaire à base de zircon fritté final a une porosité totale d'au plus 5 %.

**5.** Procédé selon l'une quelconque des revendications 1 à 4, dans lequel le matériau réfractaire à base de zircon fritté final a une vitesse de fluage inférieure à 3,50 x 10$^{-7}$ hr$^{-1}$.

**6.** Procédé selon l'une quelconque des revendications 1 à 5, dans lequel la courbe de distribution de tailles de particules des particules de zircon est dotée d'un creux entre 10 $\mu$m et 80 $\mu$m.

**7.** Procédé selon l'une quelconque des revendications 1 à 6, dans lequel au plus 50 % des particules de zircon ont une taille inférieure à 1 $\mu$m.

**8.** Matériau réfractaire à base de zircon fritté comprenant $TiO_2$ et $Y_2O_3$, ayant une densité supérieure à 4,00 g·cm$^{-3}$, comprenant une pluralité de particules de zircon concentrées frittées ensemble, dans lequel la courbe de distribution de tailles de particules des particules de zircon est multimodale, étant dotée d'un creux entre 1 $\mu$m et 80 $\mu$m, et au moins 95 % des particules de zircon concentrées frittées ensemble ont une taille de particule allant de 0,1 à 150 $\mu$m.

9. Matériau réfractaire à base de zircon fritté selon la revendication 8, ayant une vitesse de fluage inférieure à 3,50 x $10^{-7}$ hr$^{-1}$.

10. Matériau réfractaire à base de zircon fritté selon la revendication 8 ou la revendication 9, comprenant $TiO_2$ dans la quantité d'au moins 0,1 % en poids.

11. Matériau réfractaire à base de zircon fritté selon l'une quelconque des revendications précédentes 8 à 10, comprenant $Y_2O_3$ dans la quantité d'au plus 6 % en poids.

12. Matériau réfractaire à base de zircon fritté selon l'une quelconque des revendications précédentes 8 à 11, ayant une porosité totale d'au plus 5 %.

13. Matériau réfractaire à base de zircon fritté selon l'une quelconque des revendications précédentes 8 à 12, dans lequel la courbe de distribution de tailles de particules est dotée d'un creux entre 10 $\mu$m et 80 $\mu$m.

# FIG. 1

# FIG. 2

# FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61128233 B
- US 3338696 A
- US 3682609 A, Stuart M. Dockerty
- US 3437470 A
- JP 11246230 A
- US 5124287 A, Wehrenberg

**Non-patent literature cited in the description**

- Flat Glass. **VARSHNEYA, ARUN K.** Fundamentals of Inorganic Glasses. Academic Press, Inc, 1994
- Plastic Deformation, Viscous Flow, and Creep. **KINGERY et al.** Introduction to Ceramics. John Wiley & Sons, 1976, 704-767